# EUROPEAN PATENT APPLICATION

(11) **EP 1 168 015 A2**
(43) Date of publication of application: **02.01.2002**
(21) Application number: 01112982.2
(22) Date of filing: 08.06.2001
(51) Int. Cl.: G02B 6/38

(54) **Optical-fiber ferrule having passive alignment features**

(30) Priority: 23.06.2000 US 602974
(71) Applicant: BERG ELECTRONICS MANUFACTURING B.V., 5202 CB'S-Hertogenbosch (NL)
(72) Inventor: Demangone, Drew A., Latrobe, Pennsylvania 15650 (US)
(74) Representative: Beetz & Partner Patentanwälte

(57) **Abstract**

A ferrule (10) for an optical fiber (42, 43) comprises a cover (16) and a base (14). The base (14) and the cover (16) include a pair of complementary-profile mating surfaces (18, 26). At least one of the mating surfaces (18, 26) has a trough (38, 40) that receives an optical fiber (42, 43). The complementary-profile mating surfaces (18, 26) each have geometric features that substantially align the cover (16) in relation to the base (14) in both the lateral and the longitudinal directions. The base-to-cover alignment is performed on a passive basis by placing the cover (16) on the base (14) in a manner that causes the noted geometric features on the cover (16) to engage corresponding geometric features on the base (14).

## Description

The present invention relates generally to ferrules for optical fibers. More particularly, the invention relates to an optical-fiber ferrule having features that permit the various parts of the ferrule and the optical fibers within the ferrule to be precisely aligned on a passive basis.

Optical fibers, or light guides, are utilized to transmit data encoded in the form of light, i.e., electromagnetic radiation from the ultraviolet, visible-light, and infrared portions of the spectrum. The quality of data transmitted in this manner is dependent upon the signal losses along the transmission path. More particularly, intensity losses in the transmitted light signal can substantially degrade the quality of the data encoded in the signal. In extreme cases, such losses can render the data unusable.

Misalignment of the various junctions along the signal-transmission path is a common source of signal-intensity loss. For example, misalignment between the termination point of an optical fiber and an adjacent portion of the signal path will typically produce a signal loss. Hence, a ferrule for an optical fiber should position the fiber so as to allow an end of the fiber to be precisely aligned with an adjacent portion of the signal-transmission path. In particular, the signal-transmission axis of the optical fiber, i.e., fiber's longitudinal axis, should be positioned coincident with the signal-transmission axis of the adjoining portion of the signal-transmission path.

Ferrules for optical fibers are usually assembled as follows. A portion of one or more optical fibers is placed on a first block so that the fiber overhangs two opposing edges of the block. These edges are hereinafter referred to as the "forward" and "rearward" edges of the block. The edges that join the forward and the rearward edges are referred to as the "side" edges of the block. A second block of similar dimensions is mated to the first block so as to sandwich the optical fiber between the two blocks. The first and the second blocks are hereinafter referred to as a "base" and a "cover," respectively.

The base and the cover are typically formed with a square or rectangular profile. The optical fiber is accommodated by a groove formed in the mating surface of the cover or the base. The groove is oriented substantially perpendicular to the forward and the rearward edges of the cover or the base. Thus, the fiber is oriented substantially perpendicular to these edges when it is disposed within the groove.

The forward, rearward, and side edges of the cover are aligned with the corresponding edges of the base during the assembly process. Details of the alignment process are discussed below. After the cover and the base are mated, the fiber is cleaved so as lie substantially flush with the forward edges of the base and the cover. The forward edges and the end face of the fiber are then polished so as to form a substantially smooth surface. This surface is hereinafter referred to as a "contact face."

An optical connection is established by butting the contact face against another surface that comprises a similarly-oriented signal-transmission path, e.g., the contact face of another ferrule. As noted above, precise alignment of the transmission axes of the adjoining signal paths is necessary in order to maintain data-transmission quality. Establishing such alignment requires that the adjoining contact faces be substantially planar. Hence, the base and the cover need to be precisely aligned during the assembly process.

Precision alignment can be achieved through the use of so-called active-alignment techniques. Active alignment involves determining the relative location of the base and the cover through the use of a position-sensing means, e.g., a laser displacement-sensor, and then adjusting the position of the cover or the base to substantially eliminate any misalignment. This methodology adds considerable complexity to the manufacturing process, and thereby increases production time and cost.

Alternatively, the cover and the base can be mated, and the forward edges of the cover and the base can be ground so as to form a substantially planar surface. The precision grinding involved in this methodology adds substantial time and cost to the production process. Furthermore, the grinding operation increases the amount of raw material needed to manufacture the ferrule.

It is the object of the present invention to provide an optical-fiber ferrule that can be produced with a minimal expenditure of cost, time, and material. In particular, a ferrule design is presented that allows the base and the cover and be precisely aligned through a relatively simple process is highly desirable. This object is accomplished with a ferrule as claimed.

Dependent claims are directed on features of preferred embodiment of the invention. The invention provides a ferrule for an optical fiber. In a presently-preferred embodiment, the ferrule comprises a base and a cover. The base and the cover have a pair of complementary-profile mating surfaces. At least one of the mating surfaces has a trough that receives an optical fiber when the ferrule is fully assembled. The complementary-profile mating surfaces substantially align the cover in relation to the base in both the lateral and longitudinal directions. The alignment is performed on a passive basis, i.e., with no action other than placing the cover on the base so that contact is established between various alignment features on the cover and the base.

The alignment features on the cover and the base preferably include a longitudinally-oriented projection disposed on one of the mating surfaces. The projection extends along not more than a portion of the length of the mating surface. A recess is defined in the other mating surface, and extends along not more than a portion of the length of that surface. The recess receives a substantial entirety of the projection. The recess is sized and positioned so that the cover and the base are substantially aligned when the projection is disposed within the recess. Hence, the cover can be aligned in relation to the base by positioning the cover in a manner that causes the projection to abut the portions of the second mating surface that define the recess.

### Brief Description of the Drawings

The foregoing summary, as well as the following detailed description of the preferred embodiment, is better understood when read in conjunction with the appended drawings. For the purpose of illustrating the invention, the drawings show an embodiment that is presently preferred. The invention is not limited, however, to the specific instrumentalities disclosed in the drawings. In the drawings:
Fig. 1 is an isometric view of a ferrule for an optical-fiber in accordance with the present invention;
Fig. 2 is an exploded isometric view of the ferrule of Fig. 1;
Fig. 3 is an exploded front view of the ferrule of Fig. 1;
Fig. 4 is a plan view showing a mating surface of a base of the ferrule of Fig. 1; and
Fig. 5 is a plan view showing a mating surface of a cover of the ferrule of Fig. 1.

### Detailed Description of Preferred Embodiments

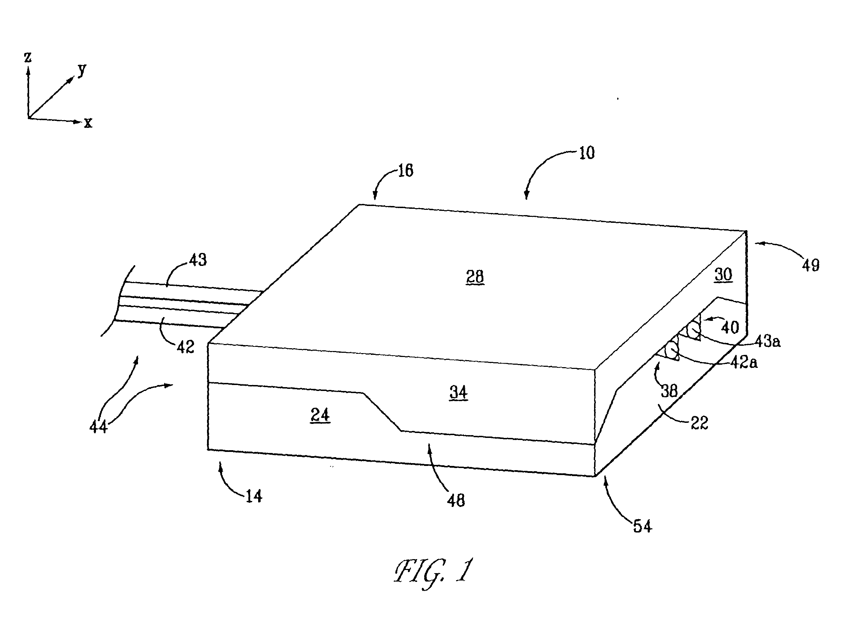

Referring to Figures 1 through 5, the invention provides a ferrule 10 for one or more optical fibers. The ferrule comprises a base 14 and a cover 16. The base 14 has a mating surface 18 and an opposing bottom surface 20. The base 14 further includes a forward edge 22 and a rearward edge 23 that opposes the forward edge 22. The base 14 also has a first sidewall 24 and an opposing second sidewall 25 that each extend between the forward edge 22 and the rearward edge 23. The bottom surface 20, the edges 22 and 23, and the sidewalls 24 and 25 could be substantially planar.

The cover 16 has a mating surface 26 and an opposing upper surface 28. The cover further includes a forward edge 30 and a rearward edge 32 located opposite the leading edge 30. The cover 16 also has a first sidewall 34 and a second sidewall 36 that each extend between the forward edge 30 and the rearward edge 32. The upper surface 28, the edges 30 and 32, and the sidewalls 34 and 36 are substantially planar.

The mating surface 18 includes a first trough 38. The trough 38 could be defined by a first sidewall 38a and a second sidewall 38b. The surface 18 further includes a second trough 40. The second trough 40 could also be defined by a first sidewall 40a and a second sidewall 40b. The troughs 38 and 40 are preferably V-shaped, as is best show in Figures 1 through 3. The troughs 38 and 40 are oriented in a longitudinal direction, and traverse an entire length of the base 14, i.e., the troughs 38 and 40 extend between the forward edge 22 and the rearward edge 23 of the base 14. (The terms "longitudinal" and "lateral," as used throughout the specification and claims, refer respectively to the "x" and "y" directions denoted in the figures.) The troughs 38 and 40 may also be present in the cover 16, or may only be present in the cover 16.

The trough 38 receives a first optical fiber 42, and the trough 40 receives a second optical fiber 43. The optical fibers 42 and 43, in conjunction with the ferrule 10, form a system 44 for optically coupling a first and a second optoelectronic device. An embodiment that accepts two optical fibers 42 and 43 is presented for illustrative purposes only. The invention is equally applicable to embodiments that accommodate one, or more that two optical fibers.

The base 14 and the cover 16 are coupled by way of the mating surfaces 18 and 26. Hence, the optical fibers 42 and 43 are sandwiched between the mating surfaces 18 and 26 when the ferrule 10 is assembled, as shown in Figure 1. Preferably, the mating surfaces 18 and 26 are bonded using a compliant adhesive or resin. The adhesive or resin preferably holds the fibers 42 and 43 in place without imparting undue stress on the fibers 42 and 43. Alternatively, the surfaces 18 and 26 can be joined using mechanical fastening means.

The mating surfaces 18 and 26 are shown in their entireties in Figures 4 and 5, respectively. The mating surfaces 18 and 26 have complementary profiles that cause the base 14 and the cover 16 to substantially align when the cover 16 is placed on the base 14. The term "complementary profile," as used throughout the specification and claims, refers to a geometric relationship between the mating surfaces 18 and 26 in which various alignment features on the mating surface 18 engage corresponding alignment features on the cover mating surface 26 (the noted alignment features are discussed in detail below). This engagement causes the base 14 and the cover 16 to substantially align in the lateral, longitudinal, and vertical (z-axis) directions. Furthermore, the invention allows the base 14 and the cover 16 to be aligned on a passive basis, i.e., with no action other than placing the cover 16 on the base 14 so that contact is established between the alignment features of the cover 16 and the base 14.

The base 14 and the cover 16 are sized so that the forward edges 22 and 30 are substantially flush when the base 14 and the cover 16 are aligned as noted. The rearward edges 23 and 32 of the base 14 and the cover 16 likewise lie substantially flush when the base 14 and the cover 16 are aligned. Furthermore, the sidewalls 26 and 28 of the base 14 are substantially flush with the sidewalls 34 and 36, respectively, of the cover 16 when the base 14 and the cover 16 are aligned.

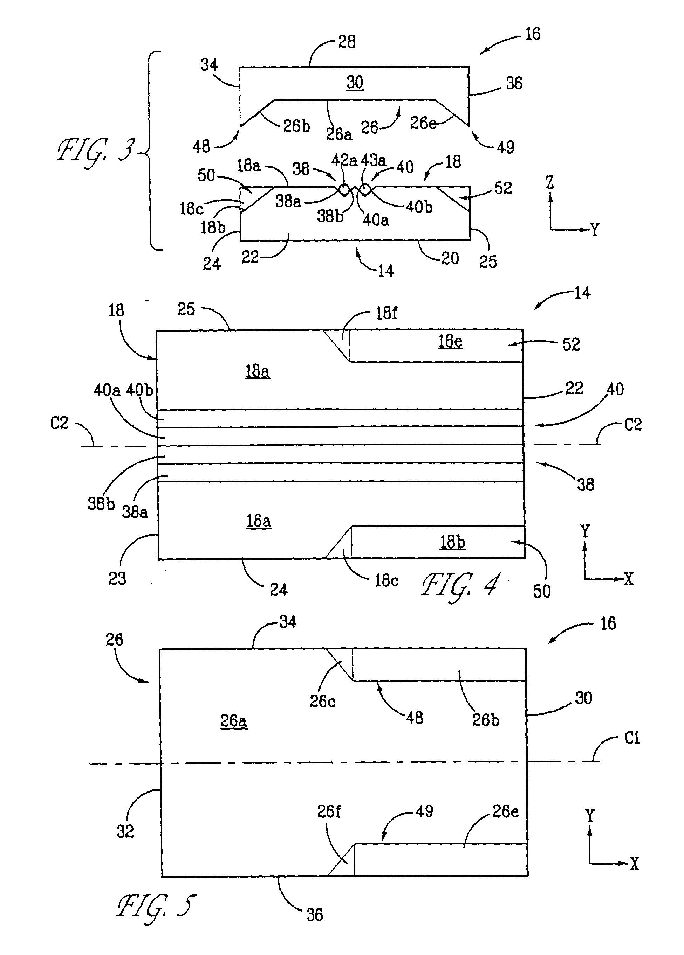

Specific details of the mating surfaces 18 and 26 follow. The cover mating surface 26 includes a planar portion 26a. The mating surface 26 also includes a first longitudinally-oriented edge 26b and a first laterally-oriented edge 26c. The longitudinally-oriented edge 26b adjoins the planar portion 26a at an oblique angle, as is best shown in Figure 3. The edge 26b also adjoins the laterally-oriented edge 26c and the sidewall 34. The laterally-oriented edge 26c adjoins the planar portion 26a at an oblique angle. The edge 26c also adjoins the longitudinally-oriented edge 26b and the sidewall 34.

The edges 26b and 26c define a projection 48. The projection 48 is elevated in relation to the planar portion 26a, i.e., the projection 48 and the planar portion 26a do not share a common position along the vertical (z) axis. The oblique orientation of the longitudinally-oriented edge 26b gives the projection 48 a substantially triangular cross-section, as is most clearly evident in Figure 3. The edge 26b and, thus, the projection 48, extend along not more than a portion of the total length (x-dimension) of the mating surface 26. Preferably, the edge 26b (and the projection 48) extend from about the longitudinal midpoint of the mating surface 26 to the rearward edge 23.

The cover mating surface 26 also includes a second longitudinally-oriented edge 26e and a second laterally-oriented edge 26f. The longitudinally-oriented edge 26e adjoins the planar portion 26a at an oblique angle (see Figure 3). The edge 26e also adjoins the laterally-oriented edge 26f and the sidewall 36. The laterally-oriented edge 26f adjoins the planar portion 26a at an oblique angle. The edge 26f also adjoins the longitudinally-oriented edge 26e and the sidewall 36.

The edges 26e and 26f form a projection 49. The projections 48 and 49 are disposed about a longitudinal centerline C1 of the cover 16 on a substantially symmetrical basis. The projections 48 and 49 are utilized to align the cover 16 in relation the base 14, as explained in detail below.

The base mating surface 18 includes a planar portion 18a. The base mating surface 18 also includes a first longitudinally-oriented edge 18b and first a laterally-oriented edge 18c. The longitudinally-oriented edge 18b adjoins the planar portion 18a at an oblique angle, as is best shown in Figure 3. The edge 18b also adjoins the laterally-oriented edge 18c and the sidewall 24. The laterally-oriented edge 18c adjoins the planar portion 18a at an oblique angle. The edge 18c also adjoins the longitudinally-oriented edge 18b and the sidewall 24.

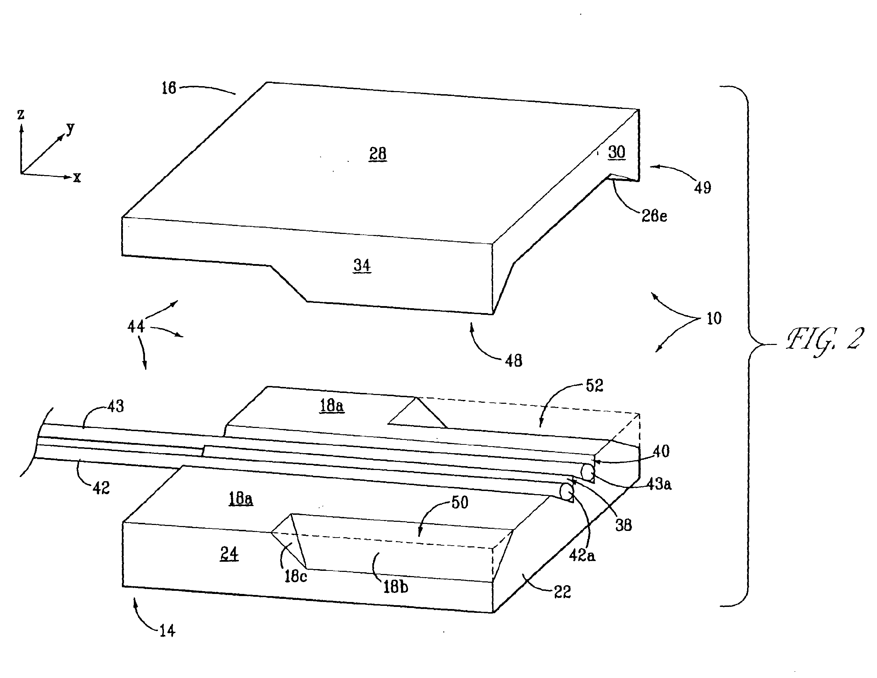

The edges 18b and 18c define a recess 50. The recess 50 represents a depressed volume extending below a plane defined by the planar portion 18a, as shown in phantom in Figure 2. The oblique orientation of the edge 18b gives the recess 50 a substantially triangular cross-section.

The base mating surface 18 also includes a second longitudinally-oriented edge 18e and a second laterally-oriented edge 18f. The longitudinally-oriented edge 18e adjoins the planar portion 18a at an oblique angle. The edge 18e also adjoins the laterally-oriented edge 18f and the sidewall 25. The laterally-oriented edge 18f adjoins the planar portion 18a at an oblique angle. The edge 18f also adjoins the longitudinally-oriented edge 18e and the sidewall 25.

The edges 18e and 18f form a recess 52. The recesses 50 and 52 are disposed about a longitudinal centerline C2 of the base 14 on a substantially symmetrical basis. The recesses 50 and 52 are utilized in conjunction with the projections 48 and 49 to align the cover 16 and the base 14.

The recesses 50 and 52 and the projections 48 and 49 represent the previously-noted alignment features of the cover 16 and the base 14. The dimensions of the recesses 50 and 52 are approximately the same as the dimensions of the projections 48 and 49. Furthermore, the recesses 50 and 52 and the projections 48 and 49 are positioned so that the recesses 50 and 52 receive the projections 48 and 49, respectively, when the cover 16 is mated to and aligned with the base 14. More particularly, the cover edges 26b and 26e abut the base edges 18b and 18e, respectively, when the cover 16 is mated to the base 14. This contact aligns the cover 16 laterally in relation to the base 14. The cover edges 26c and 26f abut the base edges 18c and 18f, respectively, when the cover 16 is mated to the base 14. This contact aligns the cover 16 longitudinally in relation to the base 14. Additionally, the cover 16 is guided into its aligned position with no action other than placing the cover 16 on the base 14 in a manner that causes the noted surfaces to abut in the described manner.

The base 14 and the cover 16 are preferably manufactured from silicon wafer board. The mating surfaces 18 and 26 are preferably formed by commonly-known etching techniques. Optimally, the surfaces 18 and 26 are formed by anisotropic etching. The use of anisotropic etching allows the placement and the dimensions of the projections 48 and 49, the recesses 50 and 52, and the toughs 38 and 40 to be controlled with a high degree of accuracy. Specifically, anisotropic etching allows the surfaces that form the projections 48 and 49, the recesses 50 and 52, and the toughs 38 and 40 to be etched along preferred crystalline planes in the silicon wafer board. This technique allows the noted surfaces to be formed with sub-micron accuracy. Hence, the base 14 and the cover 16, as well as the optical fibers 42 and 43, can be aligned with comparable accuracy.

An example of an anisotropic etching process is described in U.S. Patent No. 4,210,923 (North, et al.), which is incorporated herein by reference. North discloses the use of an SiO₂ mask applied to a silicon substrate having a major surface lying in the (1, 0, 0) crystalline plane. A solution of KOH and water is applied to the substrate. The solution etches one or more grooves having sidewalls oriented along the (1, 1, 1) family of crystalline planes. The precise dimensions of the etched surfaces are controlled by the selected width of the etch. Hence, planar surfaces can be etched in the silicon substrate based on the known relative angles of the crystalline planes within the substrate. Other examples of etching monocrystalline materials to form various geometric patterns along preferred crystalline planes are contained in U. S. Patent Nos. 4,897,711; 4,779,946; and 4,446,696, each of which is incorporated herein by reference.

The use of anisotropic etching to form the mating surfaces 18 and 26 provides those surfaces with the geometric profiles shown in the figures. More specifically, the various surfaces that form the projections 48 and 49, the recesses 50 and 52, and the toughs 38 and 40 are etched along the (1, 1, 1) crystalline plane. This plane is oriented at an angle of about 55 degrees in relation to the (1, 0, 0) plane upon which the planar portions 18a and 26a are disposed. Hence, the longitudinally-oriented edge 18e and the laterally-oriented edge 18 fare disposed at an angle of about 55 degrees in relation to the planar portion 18a. The longitudinally-oriented edge 26e and the laterally-oriented edge 26f are likewise disposed at an angle of about 55 degrees in relation to the planar portion 26a. Furthermore, the trough sidewalls 38a, 38b, 40a, and 40b are likewise disposed at an angle of about 55 degrees in relation to the adjoining planar portions 18a and 26a.

The ferrule 10 is preferably assembled in the following manner. A portion of the first optical fiber 42 is positioned in the trough 38 so that the fiber 42 overhangs the forward edge 20 of the base 14. A portion of the second optical fiber 43 is positioned in the trough 40 so that the fiber 43 also overhangs the forward edge 20. Adhesive or resin is applied to one or both of the mating surfaces 18 and 26. The cover 16 is subsequently mated to and aligned with the base 14 by placing the cover 16 on the base 14 so as to cause the surfaces 18b, 18c, 18e, and 18f to abut the surfaces 26b, 26c, 26e, and 26f in the above-described manner. As noted previously, the geometric relationship between these surfaces, combined with the precise manufacturing tolerances afforded by the anisotropic etching process, cause the cover 16 and the base 14 to align with sub-micron accuracy.

Following the mating of the cover 16 and the base 14, the optical fiber 42 is cleaved so that an end face 42a of the fiber 42 lies substantially flush with the forward edges 22 and 30. The optical fiber 43 is likewise cleaved so that an end face 43a of the fiber 43 lies substantially flush with the forward edges 22 and 30. The forward edges 22 and 30 and the end faces 42a and 43a are subsequently polished. Preferably, the edges 22 and 30 and the end faces 42a and 43a are polished at an angle of about eight degrees to minimize back-reflection through the fibers. The above-noted process results in a substantially planar contact face 54 comprising the forward edges 22 and 30 and the end faces 42a and 43a. The ferrule 10 is utilized to establish an optical connection by butting the contact face 54 against a similar contact face on an optoelectronic device. Alternatively, the contact face 54 can be butted against the contact face 54 of another ferrule 10 to establish an optical connection.

The present invention furnishes advantages pertaining (but not limited) to the manufacture of the ferrule 10. For example, the alignment features of the mating surfaces 18 and 26 allow the cover 16 and the base 14 to be precisely aligned with a minimal expenditure to time, effort, and material in relation to commonly-used ferrules. In particular, the cover 16 and the base 14 can be aligned by simply joining the mating surfaces 18 and 26 so that the surfaces 18 and 26 abut in the above-noted manner. Hence, the invention obviates any need to precisely measure and adjust the position of the cover 16 or the base 14 during the assembly process of the ferrule 10. The invention also eliminates the necessity of grinding the forward surfaces 22 and 30. Simplifying the assembly process in this manner is particularly advantageous in the high-rate-of-production environments in which optical-fiber ferrules are typically manufactured.

It is to be understood that even though numerous characteristics and advantages of the present invention have been set forth in the foregoing description, together with details of the structure and function of the invention, the disclosure is illustrative only, and changes may be made in detail, especially in matters of shape, size, and arrangement of the parts, within the principles of the invention to the full extent indicated by the broad general meaning of the terms in which the appended claims are expressed. For example, the projections 48 and 49 may be formed in the base 14, and the recesses 50 and 52 may be formed in the cover 16 in contradistinction to the exemplary embodiment. Another example of possible variations to the disclosed embodiment pertains to the geometric profiles of projections 48 and 49 and the recesses 50 and 52. Specifically, the projections and 49 and the recesses 50 and 52 are not limited to the triangular profiles shown in the exemplary embodiment; other geometric configurations, e.g., rectangular, are within the contemplated scope of the invention.

## Claims

1. A ferrule (10) for an optical fiber (42, 43), comprising a base (14) and a cover (16), the base (14) and the cover (16) having a pair of complementary-profile mating surfaces (18, 26), the pair of complementary-profile mating surfaces (18, 26) substantially aligning the cover (16) in relation to the base (14) in a lateral direction and a longitudinal direction.

2. The ferrule (10) of claim 1, wherein at least one of the complementary-profile mating surfaces (18, 26) has a trough (38, 40) that receives the optical fiber (42, 43).

3. The ferrule (10) of claim 2, wherein a first of the complementary-profile mating surfaces (26) defines a longitudinally-oriented projection (48, 49) that extends along not more than a portion of a length of the first mating surface (18), and a second of the complementary-profile mating surfaces (18) defines a longitudinally-oriented recess (50, 52) that extends along not more than a portion of a length of the second mating surface (18) and that receives a substantial entirety of the projection (48, 49), whereby the cover (16) is substantially aligned in relation to the base (14) in the lateral and the longitudinal directions.

4. The ferrule (10) of claim 3, wherein:
the first mating surface (26) has a planar portion (26a), a laterally-oriented portion (26c), and a longitudinally-oriented portion (26b), the laterally and the longitudinally-oriented portions (26b, 26c) defining the projection (48, 49) and being oblique to the planar portion (26a), whereby the projection (48, 49) has a substantially triangular cross-section; and
the second mating surface (18) has a planar portion (18a), a laterally-oriented portion (18c), and a longitudinally-oriented portion (18b), the laterally and the longitudinally-oriented portions (18b, 18c) of the second mating surface defining the recess (50, 52) and being oblique to the planar portion (18a) of the second mating surface (18), whereby the recess (50, 52) has a substantially triangular cross-section.

5. The ferrule (10) of claim 3, wherein the first mating surface (26) defines two of the projections (48, 49) and the second mating surface (18) comprises two of the recesses (50, 52).

6. The ferrule (10) of claim 2, wherein the trough (38, 40) is substantially V-shaped.

7. The ferrule (10) of claim 2, wherein the base (14) has at least two of the longitudinally-oriented troughs (38, 40).

8. The ferrule (10) of claim 1, wherein the base (14) and the cover (16) are formed from silicon wafer board.

9. The ferrule (10) of claim 1, wherein least a portion of the pair of complementary mating surfaces (18, 26) is formed by anisotropic etching.

10. A system for optically coupling a first and a second optoelectronic device, comprising an optical fiber (42, 43), and a ferrule according to at least one of the preceding claims.
